# DEMANDE DE BREVET EUROPEEN

(11) **EP 1 321 339 A1**
(43) Date de publication de la demande: **25.06.2003**
(21) Numéro de dépôt: 02356247.3
(22) Date de dépôt: 27.11.2002
(51) Int. Cl.: B60T 7/10, B60T 13/74

(54) **Dispositif de commande électrique d'un frein de stationnement et/ou de secours**

(30) Priorité: 30.11.2001 FR 0115666
(71) Demandeur: Société Européenne de Fabrications Industrielles, 38210 Tullins (FR)
(72) Inventeur: Lerouge, Dominique, 38430 Moirans (FR); Basuyau, Hélène, 38300 Bourgoin Jailleu (FR); Trocme, Florian, 38180 Seyssins (FR); De Gelis, Christian, 41500 Muides-sur-Loire (FR)
(74) Mandataire: Maureau, Philippe

(57) **Abrégé**

Ce dispositif comprend un bâti (2) portant des moyens (10) actionnés par au moins un moteur électrique (17), pour exercer une traction sur au moins un organe de commande (3) mobile par rapport au bâti (2) et destiné à être relié à des moyens de freinage (6), caractérisé en ce que les moyens de traction (10) comprennent :
- au moins une poulie de traction (11) qui comprend au moins un réa (12) et qui est solidaire de l'organe de commande (3),
- un tambour d'enroulement (13) solidaire d'un arbre moteur (14) entraîné par le moteur électrique (17) fixé sur le bâti,
- et un organe de traction souple (20), de forme allongée, qui présente deux extrémités (21,22), dont une première extrémité (21) est fixée à des moyens (23) d'accrochage solidaires du bâti (2), qui passe par la poulie (11) et dont l'autre extrémité (22) est fixée sur le tambour d'enroulement (13), de manière que l'enroulement de l'organe de traction (20) sur le tambour (13), entraîné en rotation par le moteur électrique (17), produit un déplacement de la poulie (11) dans le sens d'une traction de l'organe de commande (3).

## Description

La présente invention concerne le domaine technique des dispositifs de commande électrique pour des freins de stationnement et/ou de secours de véhicules automobiles ou analogue.

Dans le domaine ci-dessus, il est connu de mettre en oeuvre des dispositifs de commande à motoréducteur électrique irréversible, entraînant un tambour d'enroulement sur lequel vient s'emmagasiner un câble primaire assurant la traction de câbles secondaires commandant directement des moyens de freinage ou frein de stationnement.

Généralement, l'irréversibilité du motoréducteur est assurée par un système de transmission à renvoi d'angle comprenant, le plus souvent, une vis sans fin entraînée directement par l'arbre moteur et engrenant une roue dentée d'entraînement du tambour d'enroulement. L'irréversibilité est alors obtenue par le profil particulier retenu pour la vis d'entraînement et la denture de la roue. Ce type de transmission ou de motoréducteur est appelé irréversible, dans la mesure où une action ou un effort exercé sur le tambour d'enroulement n'est pas en mesure d'entraîner la rotation de la vis. Ainsi, tant que le moteur d'entraînement de la vis n'est pas alimenté, la rotation du tambour d'enroulement, solidaire de la roue dentée, est bloquée.

De tels dispositifs de commande électrique d'un frein de stationnement donnent entière satisfaction en ce qui concerne leur fonction de mise en service et de relâchement du frein de stationnement et/ou de secours. Toutefois, le type de transmission, retenu pour assurer la traction du câble primaire de commande, présente l'inconvénient d'être particulièrement onéreux à réaliser, dans la mesure où il est nécessite des pièces usinées présentant un profil particulier. De plus, il est nécessaire de mettre en oeuvre, pour obtenir un temps de réaction satisfaisant, un moteur de forte puissance présentant une vitesse de rotation relativement élevée, associé à un couple également élevé, de sorte qu'un tel dispositif présente, dans son ensemble, un prix de revient relativement important.

Il apparaît donc le besoin de disposer d'un nouveau type de dispositif de commande électrique d'un frein de stationnement et/ou de secours dont le système de transmission soit moins cher à réaliser que le système à vis sans fin et qui ne requiert pas un moteur électrique de forte puissance.

Afin d'atteindre cet objectif, l'invention concerne un dispositif de commande d'au moins un frein de stationnement et/ou de secours de véhicule automobile ou analogue comprenant un bâti portant des moyens actionnés par au moins un moteur électrique, pour exercer une traction sur au moins un organe de commande mobile par rapport au bâti et destiné à être relié à des moyens de freinage. Selon l'invention, le dispositif de commande est caractérisé en ce que les moyens de traction comprennent :
- au moins une poulie de traction qui comprend au moins un réa et qui est solidaire de l'organe de commande,
- un tambour d'enroulement solidaire d'un arbre moteur entraîné par le moteur électrique fixé sur le bâti,
- et un organe de traction souple, de forme allongée, qui présente deux extrémités, dont une première est fixée à des moyens d'accrochage solidaire du bâti, qui passe par la poulie et dont l'autre extrémité est fixée sur le tambour d'enroulement, de manière que l'enroulement de l'organe de traction, sur le tambour, entraîné en rotation par le moteur électrique, produit un déplacement de la poulie dans le sens d'une traction de l'organe de commande.

L'organe souple de traction peut être réalisé de toute manière appropriée et constitué par exemple par un câble métallique ou textile toroné ou non ou encore une corne à piano par exemple. Selon une forme préférée de réalisation de l'invention, l'organe souple de traction est constitué par une courroie réalisée, par exemple en polyester, en Kevlar ou en polyamide. De manière préférée, il est utilisé une courroie comprenant des fibres textiles, cette courroie étant alors tissée.

A la suite de différent essais, il est apparu que les courroies, comprenant des fibres de Kevlar, offraient les meilleures caractéristiques de résistance à l'allongement dû à la traction. Toutefois, un feuillard métallique pourrait également être utilisé en tant que courroie.

De manière préférée, le dispositif de commande, conforme à l'invention, définit un moufle avec un seul renvoi pour assurer la traction de l'organe de commande. Toutefois, conformément à l'invention, la poulie de traction pourrait comprendre plusieurs réas auxquels correspondraient autant de réas d'une poulie de renvoi, solidaires du bâti. Ainsi, l'organe souple de traction effectuerait plusieurs allers et retousr entre la poulie de renvoi et la poulie de traction avant de venir se fixer sur le tambour d'enroulement. Un tel système offre alors un plus grand degré de démultiplication.

Selon une caractéristique préférée de réalisation de l'invention, le moteur électrique est associé à un réducteur à rotation réversible qui comprend l'arbre moteur portant le tambour d'enroulement.

Selon une autre caractéristique de l'invention, le dispositif de commande comprend deux moteurs électriques accouplés pour assurer l'entraînement, en rotation, du tambour. Cette caractéristique avantageuse de l'invention permet alors, à vitesse de rotation égale, de réduire de moitié le couple nécessaire au niveau de chaque moteur. Or, la puissance d'un moteur électrique est liée notamment aux dimensions de son rotor. Ainsi, la possibilité de mettre en oeuvre deux moteurs électriques de moindre puissance, accouplés, permet de réduire, par exemple, l'épaisseur des moteurs utilisés et donc l'encombrement total du dispositif de commande.

Selon une autre caractéristique de l'invention, le dispositif de commande comprend également des moyens de blocage de la rotation du tambour au moins dans le sens d'un déroulement de l'organe de traction. Ces moyens de blocage de la rotation du tambour peuvent être réalisés de toutes façons appropriées et se trouvent, soit associés directement au tambour, soit, au contraire, associés au moteur électrique et, par exemple, à l'axe d'entraînement de ce dernier.

De manière préférée, les moyens en déblocage sont commandés électriquement afin de permettre le déroulement de l'organe souple enroulé sur le tambour et un relâchement de la traction exercée sur l'organe de commande et donc, in fine, un relâchement du ou des freins de stationnement. Bien entendu, la commande en déblocage peut être assurée de toutes façons appropriées. Ainsi, il peut être envisagé d'assurer une commande électrique, actionnée conjointement avec l'alimentation du moteur électrique, de façon à obtenir un déroulement de l'organe souple enroulé sur le tambour. Toutefois, les moyens de commande en déblocage pourraient être également actionnés mécaniquement par un utilisateur du dispositif de commande, afin de permettre, par exemple, un déblocage de secours. Bien entendu, la mise en oeuvre des moyens de commande du déblocage électrique peut être combinée avec un déblocage mécanique à la main.

Selon une forme préférée mais non exclusive de réalisation de l'invention, les moyens de blocage comprennent une roue à dents de loup solidaire du tambour d'enroulement ou de l'axe du moteur. La roue dentée est alors associée à un cliquet de blocage solidaire du bâti. La denture de la roue est par ailleurs orientée pour faire obstacle à une rotation du tambour dans le sens d'un déroulage. Les moyens de manoeuvre à commande électrique actionnent alors le cliquet, de manière à l'éloigner de la roue dentée pour en autoriser la rotation dans le sens d'un déroulage. En revanche, l'orientation des dents de la roue autorise une rotation du tambour dans le sens d'un enroulement même lorsque le cliquet vient en frottement contre la roue.

Comme cela a été précisé plus haut, les moyens de blocage peuvent également être prévus pour freiner ou bloquer la rotation de l'arbre de moteur et sont alors commandés en déblocage lors de l'alimentation du moteur électrique.

Selon une forme préférée de réalisation du dispositif de commande, conforme à l'invention, ce dernier comprend des moyens pour exercer, à la main, une traction sur l'organe de traction souple. De tels moyens de manoeuvre permettent alors d'assurer une mise en oeuvre du frein de stationnement et/ou de secours même en cas de défaillance de l'alimentation électrique ou du moteur électrique en lui-même.

Les moyens de manoeuvre peuvent être réalisés de toutes façons appropriées. Ainsi, les moyens de manoeuvre peuvent être constitués par un système d'entraînement auxiliaire, solidaire du tambour d'enroulement et entraîné en rotation à partir d'une manivelle ou d'une clef de secours manoeuvrable à la main.

Selon une forme préférée de réalisation, les moyens de manoeuvre intègrent les moyens d'accrochage de l'organe souple de traction sur le bâti.

Les moyens de manoeuvre peuvent comprendre alors :
- un levier qui est fixé de manière pivotante sur le bâti et sur lequel une extrémité de l'organe de traction souple est fixé,
- et des moyens de verrouillage réversibles du mouvement du levier.

Afin de permettre un bon enroulement de l'organe souple de traction et d'éviter une détérioration de ce dernier, les moyens de manoeuvre comprennent, de façon préférée, un secteur d'enroulement qui est solidaire du levier de manoeuvre et sur lequel est fixé l'organe souple de traction.

Par ailleurs, afin de réduire autant que faire se peut, la course morte de la poulie de traction, résultant par exemple de l'apparition de jeu dû à un allongement de l'organe souple de traction ou à un tassement des différentes gaines de protection des câbles de commande des moyens de freinage, l'invention comprend dans une forme, préférée mais non strictement nécessaire, de réalisation des moyens pour assurer une pré-tension de l'organe souple de traction. De manière préférée mais non strictement nécessaire, les moyens de pré-tension sont adaptés pour maintenir, de façon automatique, cette pré-tension.

De tels moyens de pré-tension automatique peuvent être réalisés de toutes façons appropriées et par exemple être intégrés aux moyens d'accrochage d'une extrémité de l'organe souple de traction sur le bâti. Ainsi, les moyens de pré-tension automatique peuvent, par exemple, comprendre un coulisseau, guidé en translation dans une glissière solidaire du bâti. Les moyens de pré-tension comprennent aussi un ressort interposé entre le coulisseau et le bâti et adapté pour exercer un effort sur le coulisseau dans le sens d'une mise en pré-tension de l'organe souple de traction. Le coulisseau est par ailleurs associé à un système anti-retour qui bloque le déplacement du coulisseau lorsqu'une traction, supérieure à celle exercée par le ressort, est appliquée sur l'organe de traction par le tambour d'enroulement par exemple.

Selon une autre forme de réalisation de l'invention, les moyens de pré-tension automatique sont intégrés aux moyens de manoeuvre de secours.

Dans une variante de réalisation, le secteur d'enroulement est alors lié au levier par, d'une part, une liaison en rotation réversible, de sorte que le levier n'est lié en rotation au secteur d'enroulement que dans le sens d'une mise en tension de l'organe souple. Le secteur d'enroulement est, d'autre part, lié au levier de manoeuvre par un organe de rappel élastique exerçant un effort sur le secteur d'enroulement, dans le sens d'une mise en tension de l'organe souple de traction. Ainsi, lorsque la tension de l'organe souple de traction est inférieure à l'effort exercé par le ressort, les moyens d'entraînement en rotation réversible sont débloqués et le ressort exerce pleinement son action de mise en tension de l'organe souple de traction. En revanche, lorsque l'effort, exercée sur l'organe souple de traction soit par le levier, soit par le tambour d'enroulement, est supérieure à la valeur de pré-tension exercée par le ressort, les organes d'entraînement en rotation réversible sont bloqués et le secteur d'enroulement est lié en rotation au levier de manoeuvre.

Selon une autre caractéristique de l'invention, le dispositif de commande comprend également des moyens de pilotage du fonctionnement du moteur électrique. Les moyens de pilotage sont adaptés pour commander le moteur de manière à assurer, d'une part, un enroulement suffisant de l'organe souple de traction en vue d'une mise en service des moyens de freinage et, d'autre part, un déroulement suffisant de l'organe souple de traction pour désactiver les moyens de freinage.

Afin effectuer ce pilotage et notamment d'interrompre l'alimentation du moteur électrique, lorsque la traction exercée sur l'organe de commande exerce une certaine valeur, les moyens de pilotage comprennent de préférence mais non nécessairement, des moyens de mesure de la traction exercée sur l'organe de commande.

De la même manière, dans une forme préférée de réalisation, les moyens de pilotage comprennent également des moyens de mesure de la tension de l'organe souple de traction. Ces moyens de mesure peuvent alors être utilisés lors de la phase de déroulement de l'organe souple de traction afin d'éviter de trop le détendre et donc de créer des jeux ou une course morte qui devra être rattrapée lors de la mise en tension de l'organe souple de traction. Les moyens de mesure de la tension de l'organe souple de traction peuvent être réalisés de toutes façons appropriées telles que par exemple au moyen d'un palpeur associé à un rupteur ou contacteur.

Selon une autre caractéristique de l'invention, les moyens de pilotage peuvent comprendre des capteurs de position de la poulie afin de commander le fonctionnement du moteur électrique en fonction de la position de cette dernière. Ces capteurs de position peuvent être réaliser de toute façon appropriée telle que par exemple sous la forme de contacteurs ou encore de capteurs optiques.

Diverses autres caractéristiques de l'invention ressortent de la description ci-dessous, effectuée en référence aux dessins annexés qui illustrent différentes formes non limitatives de réalisation d'un dispositif de commande électrique d'un frein à main ou de secours, conforme à l'invention.

La figure 1 est une vue en perspective d'une première forme de réalisation d'un dispositif de commande de frein selon l'invention.

La figure 2 est une élévation, en vue de dessus du dispositif de commande, illustrée à la figure 1.

La figure 3 est une schématique d'un exemple de réalisation de moyens de mesure de la traction exercée par le dispositif de commande selon l'invention.

Les figures 4 et 5 sont des vues schématiques d'un exemple de réalisation de moyens de mesure ou de détermination de la tension de l'organe souple de traction.

La figure 6 est vue schématique d'un exemple de réalisation de moyens pour assurer une pré-tension ou précontrainte de l'organe souple de commande permettant également un déverrouillage de secours du frein commandé par le disposition selon l'invention.

La figure 7 est une perspective d'une forme de réalisation d'un dispositif de commande électrique d'un frein de stationnement, selon l'invention comprenant également un levier manoeuvre pour une commande à la main du freinage.

La figure 8 est une élévation selon le plan VIII-VIII de la figure 7.

La figure 9 illustre une autre forme de réalisation des moyens pour assurer une pré-tension ou précontrainte de l'organe souple de commande, assurant une compensation automatique des jeux.

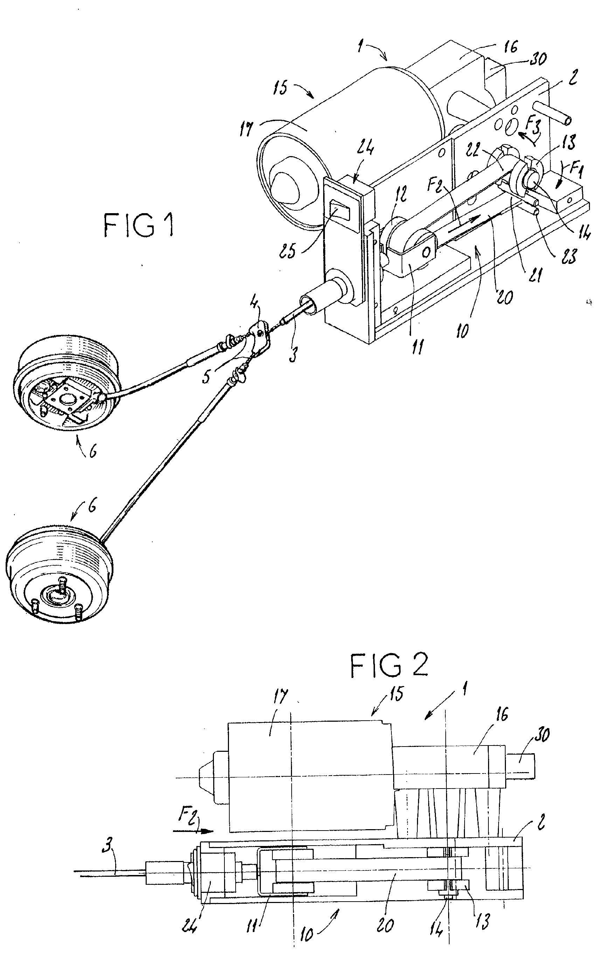

Un dispositif de commande d'un frein de stationnement et/ou de secours de véhicule automobile ou analogue selon l'invention tel qu'illustré aux figures 1 et 2 et désigné dans son ensemble par la référence 1, comprend un bâti 2 destiné à être adapté sur le châssis non représenté d'un véhicule automobile ou analogue. Le dispositif de commande 1 est alors adapté pour exercer une traction sur au moins un organe de commande 3 constitué, selon l'exemple illustré, par un câble primaire, solidaire d'un palonnier d'accrochage 4 pour deux câbles secondaires 5 agissant directement sur des moyens 6 de freinage des roues du véhicule. L'organe de commande 3 est alors mobile en translation au moins par rapport au bâti 2. Bien entendu, l'organe de commande 3 n'est pas nécessairement réalisé sous la forme d'un câble dit "primaire" d'un système de frein de stationnement mais pourrait être réalisé de toute autre façon appropriée telle que par exemple sous la forme d'une tringle ou d'un levier.

Afin d'exercer une traction sur l'organe de commande 3, le dispositif de commande 1, conforme à l'invention, comprend, en tant que moyen de traction 10, au moins une poulie de traction 11 qui est solidaire de l'organe de commande 3. La poulie 11 comprend au moins un réa 12 et, selon l'exemple illustré, seulement un réa 12. Selon une caractéristique essentielle de l'invention, les moyens de traction 10 comprennent en outre un tambour d'enroulement 13, solidaire de l'arbre moteur 14 un ensemble motoréducteur électrique 15 fixé sur le bâti 2. Le motoréducteur 15 comprend un réducteur 16, de préférence de type réversible, associé à un moteur électrique 17.

Les moyens de traction 10 comprennent également un organe de traction souple 20 de forme allongée, présentant deux extrémités 21, 22. Selon l'exemple illustré, l'organe souple de traction 20 est constitué par une courroie de préférence en tissu ou ruban tissé dont les fils de la chaîne comprennent des fibres de Kevlar.

L'une des extrémités 21 de l'organe souple de traction 20 est tout d'abord fixée à des moyens d'accrochage 23 solidaires du châssis 2. L'organe souple de traction 20 passe ensuite par le réa 12 de la poulie 11 pour être fixé au niveau de son autre extrémité 23 sur le tambour d'enroulement 13.

Afin d'assurer le fonctionnement du moteur électrique 16, le dispositif de commande 1 comprend également des moyens 24 de pilotage électrique qui comprennent, selon l'exemple illustré, un interrupteur 25 assurant par exemple mais non nécessairement une fonction d'inverseur.

Le dispositif de commande 1 selon l'invetion, tel que décrit ci-dessus, fonctionne de la manière suivante.

Lorsqu'il est souhaité assurer une mise en service des freins de stationnement de l'interrupteur 25 est actionné de manière à entraîner une rotation du tambour d'enroulement 13 dans le sens de la flèche F1. L'enroulement progressif de la courroie 20 sur le tambour13 entraîne alors un déplacement de la poulie 11 dans le sens de la flèche F2, ce qui exerce une traction sur l'organe de commande 3. Il est à noter que les moyens de traction 10, selon l'invention, réalisent une sorte de moufle qui ajoute un degré de démultiplication à celui du réducteur 16 de sorte l'effort que doit fournir le moteur électrique 17 pour exercer une traction sur l'organe de commande 3 suffisante à assurer la mise en service des freins de secours se trouve réduit. La mise en oeuvre de l'organe souple de traction 20 permet ainsi d'obtenir une démultiplication, par mouflage, dont le prix de revient est bien inférieur à celui d'un système de réducteur à engrenage ou analogue.

L'arrêt de l'enroulement de l'organe souple de traction 20, lorsque l'effort exercé sur l'organe de commande 3 a atteint une valeur nominale, peut être effectué de différentes façons.

Selon une première forme de réalisation, le moteur électrique 17 peut être choisi de manière à offrir un couple maximal qui correspond à la valeur nominale de l'effort nécessaire au niveau de l'organe de traction 3. Le fonctionnement du moteur 17 est alors commandé jusqu'à obtenir un blocage de ce dernier qui est détecté par le dispositif de pilotage 24 qui en interrompt alors l'alimentation et qui commande un blocage de la rotation du tambour 13 au moyen d'un système de frein mécanique 30, disposé au niveau du réducteur16. Le blocage de la rotation du tambour 13 pourrait également être assuré au moyen d'un frein commandé agissant sur le rotor du moteur électrique 17

L'arrêt de l'enroulement de l'organe souple de traction peut être également effectué en mesurant l'effort de traction exercé sur l'organe de commande 3.

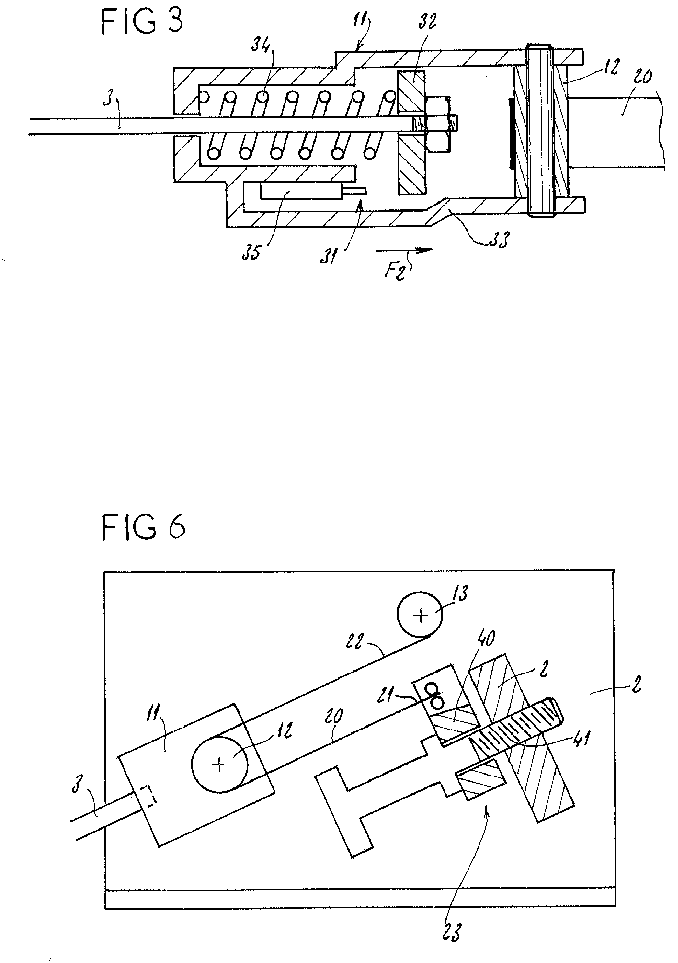

Ainsi, la figure 3 illustre un exemple de capteur de traction 31 susceptible d'être interposé entre l'organe de commande 3 et la poulie 11. Selon cet exemple de réalisation, le capteur d'effort 31 comprend un coulisseau 32 solidaire de l'organe de commande 3 et mobile, en translation, à l'intérieur du corps 33 de la poulie 11. Le capteur 31 comprend en outre un ressort hélicoïdal 34 interposé entre le coulisseau 32 et le corps 33. Lorsqu'une traction, dans le sens de la flèche F2, est exercée sur la poulie, le ressort 34 se comprime jusqu'à autoriser un contact entre le coulisseau 32 et un interrupteur 35. La raideur du ressort 34 est alors calculée pour que l'écrasement du ressort, entraînant un contact du coulisseau 32 avec l'interrupteur 35, corresponde à l'effort nominal nécessaire pour une action convenable des freins de stationnement 6sollicités par l'organe de commande 3.

Par ailleurs, lorsqu'il est souhaité une désactivation des freins de stationnement 6, l'interrupteur 25 est manoeuvré de manière à commander une rotation du tambour d'enroulement 13 en sens inverse telle qu'indiquée par la flèche F3. Il est ainsi obtenu un déroulement de l'organe souple de traction 20. Il est possible de mettre en oeuvre différents moyens afin d' assurer le nombre de tours nécessaires pour relâcher l'effort de l'organe de traction 20 afin d'obtenir une désactivation des freins 6.

Selon une première forme de réalisation non représentée, il est prévu de mettre en oeuvre des capteurs de position de la poulie 11 qui détectent son retour sa position initiale pour interrompre le fonctionnement du moteur électrique 17 en déroulement.

Toutefois, dans certaines applications, il peut apparaître souhaitable de ne pas dérouler complètement l'organe souple de traction 20, de manière à laisser subsister une certaine tension résiduelle ou pré-tension dans ce dernier. Cette pré-tension ou précontrainte permet alors de réduire au minimum les courses mortes qui doivent être compensées pour la mise en action des freins de stationnement.

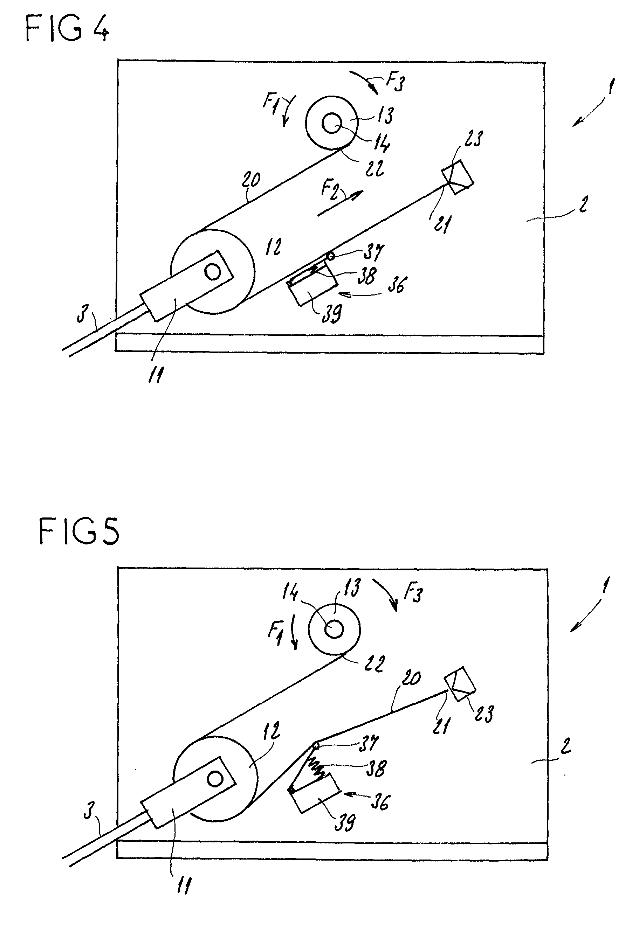

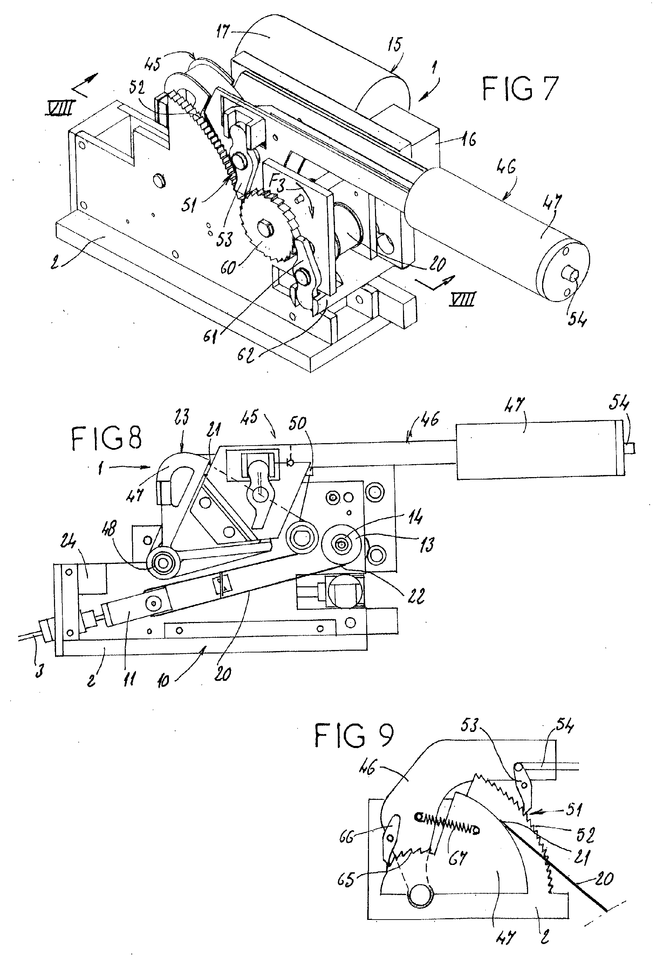

A cet effet, les moyens de pilotage 24 comprennent des moyens ou capteurs pour mesurer la tension de la courroie 20. Une forme préférée mais non strictement nécessaire de réalisation de tels capteurs 36 est illustrée schématiquement aux figures 4 et 5. Ainsi selon cet exemple, le capteur 36 comprend un palpeur 37 qui vient en appui contre l'organe souple de traction 20 et qui est asservi en extension par un ressort taré 38. Lorsque la tension, dans la courroie 20, diminue, le palpeur 36 est alors susceptible de repousser la courroie 20 comme le montre la figure 5 pour enclencher un contacteur39 associé au palpeur 37. Ainsi, il est détecté que la tension, dans la courroie, est devenue inférieure à un seuil prédéterminé correspondant à la pré-tension recherchée et les moyens de pilotage commandent alors un arrêt du moteur 17 et un blocage du tambour 13.

Selon l'invention, il peut être également prévu des moyens mécaniques pour assurer une pré-tension de l'organe souple de traction 20 ou encore pour rattraper des jeux susceptibles d'apparaître au fur et à mesure de l'utilisation du dispositif de commande conforme à l'invention.

La figure 6 illustre un exemple, non limitatif, d'un système de rattrapage de jeu associé aux moyens d'accrochage 23 de l'extrémité 22 de l'organe souple de traction 20. Selon cet exemple, les moyens de rattrapage de jeu comprennent une mâchoire 40 mobile en translation par rapport au bâti 2 et liée à ce dernier par une liaison hélicoïdale assurée par une vis 41. Ainsi, la rotation de la vis 41 permet de rapprocher plus ou moins la mâchoire 40 du bâti 2 et donc d'assurer une pré-tension de l'organe souple de traction 20. De plus, il est à noter que la vis 41 peut également assurer une fonction de moyen de déverrouillage de secours, dans la mesure où, en éloignant la mâchoire du bâti, elle permet de relâcher la tension dans l'organe souple de traction 20 et donc de désactiver les freins de stationnement 6 manoeuvrés par le dispositif 1 conforme à l'invention.

Selon l'invention, il est également possible de prévoir des moyens de manoeuvre, également dit de secours, permettant d'actionner les moyens de freinage 6 en cas de disfonctionnement du moteur électrique. Ainsi, les figures 7 et 8 illustrent une autre forme de réalisation d'un dispositif de commende 1 conforme à l'invention qui comprend de tel moyens de manoeuvre 45 comportant un levier de manoeuvre 46 destiné à être actionné à la main.Selon cet exemple, les moyens d'accrochage 23 de l'extrémité 21 de l'organe souple de traction 20 sont intégrés aux moyens manoeuvre de secours 45.

Ainsi, les moyens de manoeuvre 45 comprennent le levier 46 muni d'une poignée 47. Le levier 46 est solidaire d'un secteur d'enroulement 47 qui est fixé sur le bâti 2 par un pivot 48. Le dispositif de commande 1 comprend en outre une poulie de renvoi 50, solidaire du bâti 2 par laquelle l'organe souple de traction 20, passe avant de venir s'accrocher par son extrémité 21 sur le secteur d'enroulement 47.

Il doit être remarqué que la présence d'un tel secteur d'enroulement 47 n'est pas strictement nécessaire et que l'organe souple de traction 20 pourrait être directement accroché au levier 46. Toutefois, le secteur d'enroulement 47 permet, de manière fort avantageuse, de maintenir constant le rayon d'application de la traction sur l'organe souple 20 par le levier 46.

Selon l'exemple illustré, il est également prévu des moyens 51 de verrouillage réversibles du mouvement du levier46. Comme le montre plus particulièrement la figure 7, ces moyens de verrouillage réversible 51 sont réalisés selon une technique connue pour les leviers de frein à main. Ainsi, les moyen 51 comprennent un secteur denté 52 solidaire du bâti 2, sur lequel vient en appui un cliquet débrayable 53, solidaire du levier46, de manière à maintenir ce dernier en position relevée. Le levier de manoeuvre 46 intègre, par ailleurs, une commande 54 destinée à manoeuvrer le cliquet 52 pour le faire échapper du secteur 52 et permettre un abaissement du levier.

Par ailleurs, comme le montre également la figure 7, le dispositif comprend, en tant que moyen de blocage de la rotation du tambour 13, une roue 60 à dent de loup, associée à un cliquet de blocage 61. Les dent de la roue 60 sont orientée pour faire obstacle à une rotation du tambour 13 dans le sens d'un déroulage de l'organe souple de traction 20 tel qu'indiqué par la flèche 3. Le cliquet 61 est, par ailleurs, associé à des moyens de manoeuvre 62 à commande électrique actionnant le cliquet 61 de manière à l'éloigner de la roue dentée 60 pour autoriser un déroulage de l'organe souple de traction 20. Le cliquet est alors asservi en position de travail par un ressort de torsion non représenté. Les moyens 62 de commande du cliquet sont contrôlés par les moyens de pilotage 24 équipant le dispositif de commande 1 selon l'invention.

Il doit être remarqué que, selon cette deuxième forme de réalisation, illustrée aux figures 7 et 8, il est possible d'assurer une mise en oeuvre des moyens de freinage 6 du véhicule équipé du dispositif 1 conforme à l'invention, soit avec le levier de manoeuvre 46 , soit en mettant en oeuvre le moteur électrique 17. Une telle disposition présente alors l'avantage d'assurer une très grande sécurité et de permettre, en toutes circonstances, un serrage des frein de stationnement 6.

La figure 9 illustre une variante de réalisation de l'accouplement, entre le secteur d'enroulement 47 et le levier 46, intégrant des moyens de pré-tension de l'organe souple de traction 20. Selon cet exemple de réalisation, le secteur d'enroulement 47 est lié au levier 46 par une liaison en rotation réversible, réalisée sous la forme d'un secteur denté 65 aménagé sur le secteur d'enroulement 47 et coopérant avec un cliquet 66 porté par le levier 46. Les dents du secteur denté 65 et le cliquet 66 sont alors orientés de manière que le secteur d'enroulement 47 ne soit lié au levier 46 que dans le sens d'une traction de l'organe souple 20. Par ailleurs, le secteur d'enroulement 47 est lié au levier 46 par un organe de rappel élastique 67 exerçant un effort sur le secteur d'enroulement 47, dans le sens d'une mise en tension de l'organe souple de traction 20.

Bien entendu, les moyens de pré-tension de l'organe souple de traction pourraient être réalisés de toute autre manière appropriée.

Par ailleurs, diverses modifications peuvent être apportées au dispositif de commande de frein de stationnement sans sortir du cadre. de l'invention.

## Revendications

1. Dispositif de commande d'au moins un frein de stationnement et/ou de secours de véhicule automobile ou analogue du type comprenant un bâti (2) portant des moyens (10) actionnés par au moins un moteur électrique (17), pour exercer une traction sur au moins un organe de commande (3) mobile par rapport au bâti (2) et destiné à être relié à des moyens de freinage (6), **caractérisé en ce que** les moyens de traction (10) comprennent :
- au moins une poulie de traction (11) qui comprend au moins un réa (12) et qui est solidaire de l'organe de commande (3),
- un tambour d'enroulement (13) solidaire d'un arbre moteur (14) entraîné par le moteur électrique (17) fixé sur le bâti,
- et un organe de traction souple (20), de forme allongée, qui présente deux extrémités (21,22), dont une première extrémité (21) est fixée à des moyens (23) d'accrochage solidaires du bâti (2), qui passe par la poulie (11) et dont l'autre extrémité (22) est fixée sur le tambour d'enroulement (13), de manière que l'enroulement de l'organe de traction (20) sur le tambour (13), entraîné en rotation par le moteur électrique (17), produit un déplacement de la poulie (11) dans le sens d'une traction de l'organe de commande (3).

2. Dispositif de commande selon la revendication 1, **caractérisé en ce que** l'organe souple de traction (20) est constitué par une courroie.

3. Dispositif de commande selon la revendication 2, **caractérisé en ce que** la courroie (20) comprend des fibres textiles.

4. Dispositif de commande selon la revendication 2 ou 3, **caractérisé en ce que** la courroie (20) comprend des fibres de Kevlar.

5. Dispositif de commande selon l'une des revendications 1 à 4, **caractérisé en ce qu'**un réducteur (16), à rotation réversible, assure l'entraînement du tambour (13) par le moteur électrique (17).

6. Dispositif de commande selon l'une des revendications 1 à 5, **caractérisé en ce qu'**il comprend deux moteurs électriques accouplés pour assurer l'entraînement, en rotation, du tambour (13).

7. Dispositif de commande selon l'une des revendications 1 à 6, **caractérisé en ce qu'**il comprend des moyens de blocage (30, 60,61,62) de la rotation du tambour (13) au moins dans le sens d'un déroulement de l'organe souple de traction (20).

8. Dispositif de commande selon la revendication 7, **caractérisé en ce que** les moyens de blocage (30,60,61,62) sont commandés en déblocage afin de permettre le déroulement de l'organe souple (20), enroulé sur le tambour (13), et un relâchement de la traction exercée sur l'organe de commande (3).

9. Dispositif de commande selon la revendication 8, **caractérisé en ce que** les moyens de blocage comprennent :
- une roue dentée (60), associée à un cliquet de blocage (61), adaptée pour faire obstacle à une rotation du tambour (13) dans le sens (F3) d'un déroulage,
- et des moyens de manoeuvre (62), à commande électrique, actionnant le cliquet (61), de manière à l'éloigner de la roue dentée (60).

10. Dispositif de commande selon la revendication 7, **caractérisé en ce que** les moyens de blocage freinent ou bloquent la rotation de l'arbre du moteur et sont commandés en déblocage lors de l'alimentation du moteur électrique (17).

11. Dispositif de commande selon l'une des revendications 1 à 10, **caractérisé en ce qu'**il comprend des moyens (41,45,46) pour exercer, à la main, une traction sur l'organe de traction souple (20).

12. Dispositif de commande selon la revendication 11, **caractérisé en ce que** les moyens de manoeuvre (45) intègrent les moyens d'accrochage ( 23) de l'organe souple de traction (20) sur le bâti (2).

13. Dispositif de commande selon la revendication 12, **caractérisé en ce que** les moyens de manoeuvre (45) comprennent :
- un levier (46) qui est fixé de manière pivotante sur le bâti (2) et sur lequel une extrémité (21) de l'organe de traction souple (20) est fixé,
- des moyens de verrouillage réversibles (51) du mouvement du levier (46).

14. Dispositif de commande selon la revendication 13, **caractérisé en ce que** les moyens de manoeuvre (45) comprennent un secteur d'enroulement (47)qui est solidaire du levier de manoeuvre (46) et sur lequel est fixé l'organe souple de traction (20).

15. Dispositif de commande selon l'une des revendications 1 à 14, **caractérisé en ce qu'**il comprend des moyens (40,41,65,66,67) pour assurer une pré-tension de l'organe souple de traction (20).

16. Dispositif de commande selon la revendication 15, **caractérisé en ce que** les moyens de pré-tension (65,66,67) sont adaptés pour maintenir, de façon automatique, cette pré-tension.

17. Dispositif de commande selon la revendication 14, **caractérisé en ce que** le secteur d'enroulement (47) est lié au levier (46) par, d'une part, une liaison en rotation réversible (65,66), de sorte que le levier n'est lié an rotation au secteur d'enroulement que dans le sens d'une mise en tension de l'organe souple (20) et, d'autre par, un organe de rappel élastique (67) exerçant un effort sur le secteur d'enroulement dans le sens d'une mise en tension de l'organe souple de traction (20).

18. Dispositif de commande selon la revendication 15 ou 16, **caractérisé en ce que** les moyens de pré-tension (40,41,65,66,67) sont associés aux moyens d'accrochage (23), solidaires du bâti (2), d'une extrémité (21 de l'organe souple de traction (20).

19. Dispositif de commande selon l'une des revendications 1 à 18, **caractérisé en ce qu'**il comprend des moyens de pilotage (24) du fonctionnement du moteur électrique (17) qui commandent un enroulement de l'organe souple de traction (20) en vue d'une mise en service des moyens de freinage (6) et un déroulement suffisant de l'organe souple de traction (20) pour désactiver les moyens de freinage.

20. Dispositif de commande selon la revendication 19, **caractérisé en ce que** les moyens de pilotage (24) du fonctionnement du moteur électrique (17) comprennent des moyens (31) de mesure de la traction exercée sur l'organe de commande.

21. Dispositif de commande selon la revendication 19 ou 20, **caractérisé en ce que** les moyens de pilotage (24) comprennent des moyens (36) de mesure de la tension de l'organe souple de traction (20).

22. Dispositif de commande selon l'une des revendications 19 à 21, **caractérisé en ce que** les moyens de pilotage (24) comprennent des capteurs de position de la poulie.
